(19) Europäisches Patentamt / European Patent Office / Office européen des brevets

(11) **EP 2 966 297 A1**

(12) **EUROPEAN PATENT APPLICATION**

(43) Date of publication:
**13.01.2016 Bulletin 2016/02**

(51) Int Cl.:
***F03D 7/02*** (2006.01)

(21) Application number: **15175126.0**

(22) Date of filing: **02.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.07.2014 JP 2014139401**

(71) Applicant: **Hitachi, Ltd.**
**Tokyo 100-8280 (JP)**

(72) Inventors:
• **TOBINAGA, Ikuo**
  **Chiyoda-ku,, Tokyo 100-8280, (JP)**
• **KIYOKI, Souichiro**
  **Chiyoda-ku,, Tokyo 100-8280, (JP)**

(74) Representative: **Calderbank, Thomas Roger et al**
**Mewburn Ellis LLP**
**City Tower**
**40 Basinghall Street**
**London EC2V 5DE (GB)**

(54) **WIND POWER GENERATION SYSTEM**

(57) There is provided a wind power generation system in which it is possible to prevent a large load from acting on blades due to over-revolving speed when a windturbine is stopped. Causes of stopping the windturbine are classified by case. In a case where a cause of stop is at least an abnormality in which an upper limit of revolving speed has been exceeded (over-revolving speed), a windturbine control panel issues a command to continue power generation to a power control device and gives a command to change the pitch angle of the blades into a rotation stop state to a pitch control device. After giving the command to change the pitch angle of the blades into a rotation stop state to the pitch control device, upon elapse of predetermined limited duration or when a predetermined condition has been fulfilled, the windturbine control panel gives a command to discontinue power generation to the power control device.

*FIG. 2*

## Description

The present invention relates to a wind power generation system that supplies generated electric power to a power grid and, in particular, to a wind power generation system configured to stop a windturbine by changing a pitch angle of blades to bring the blades to a feathering state.

In recent years, a wind power generation system attracts attention as a power generation method that is environment-friendly and less risky. On the other hand, its power generation cost is high and it is required to further reduce the cost, while ensuring safety.

To reduce the cost of a wind power generation system, it is effective to reduce the material cost by lessening the weights of structural members of a windturbine. Particularly, reducing the mass of blades is of great importance since it also contributes to lessening the weight of a nacelle that supports the blades and the weight of a tower that supports the nacelle. While structural conditions of the blades mainly depend on aerodynamic characteristics and design conditions, lessening the weight of a blade structure can be achieved by decreasing a design load.

Until now, contriving how the turbine blades should be set in standby position when subjected to tremendous wind by controlling a pitch angle and a yaw angle, thereby alleviating a design load under tremendous wind is proposed, for example, as described in Japanese Unexamined Patent Application Publication Nos. 2006-336505, 2007-64062, and 2007-16628.

[Citation List]

    [Patent Literature 1] JP 2006-336505 A
    [Patent Literature 2] JP 2007-064062 A
    [Patent Literature 3] JP 2007-016628 A

To reduce the power generation cost of a wind power generation system, it is necessary to lessen the weights of component parts of a windturbine, as noted above. A design load that determines strength of the windturbine structure is roughly divided into three loads: a load that is applied to a windturbine placed in a stop state, when it is subjected to wind at a tremendous wind velocity such as a typhoon (load under tremendous wind); a load that is applied to a windturbine during power generation (load during power generation); and a load that is applied to a windturbine when a stop operation is carried out (load in stop operation). To lessen the weights of component parts of a windturbine, it is important not to generate a dominant load that is especially greater than others among the loads that occur in various states, as mentioned above.

In a case when a windturbine is subjected to tremendous wind, it is possible to reduce the design load under tremendous wind by adopting a method described in Japanese Unexamined Patent Application Publication Nos. 2006-336505, 2007-64062, and 2007-16628 mentioned above. However, because the windturbine fundamentally stops under tremendous wind, there is little room for further reducing load by control. Thus, it is important to prevent a load greater than the load under tremendous wind from being produced in other states.

In this situation, an examination made by the present inventors has found that there is room for further reducing a load that acts on blades when an operation to stop a windturbine is carried out. The running of a windturbine is stopped due to various causes of stopping it (abnormalities). When stopping the windturbine, it has so far been practiced to feather the blades and discontinue power generation, regardless of the cause (condition) of stopping the windturbine. In this case, according to the examination made by the present inventors, when an operation to stop the windturbine is carried out, especially, over-revolving speed may produce a large load. That is, when the windturbine discontinues power generation, the rotational system of the windturbine rotor becomes free from load and the rotor revolving speed tends to increase. As the rotator revolving speed increases, relative speed of wind that flows in the blades increases, which may produce a huge load applied to the blades and the rotor. If this load becomes dominant as a design load, a problem is posed in which the windturbine structure is not optimized, which leads to an increase in the power generation cost.

A preferred aim of the present invention is to provide a wind power generation system in which it can be prevented that a large load acts on blades due to over-revolving speed when the windturbine is stopped.

The present invention may be characterized in that causes of stopping the windturbine are classified by case and, in a case where a cause of stop is at least an abnormality in which an upper limit of revolving speed has been exceeded (over-revolving speed), a windturbine control panel issues a command to continue power generation to a power control device and gives a command to change the pitch angle of the blades into a rotation stop state to a pitch control device.

The present invention may also be characterized in that, after giving the command to change the pitch angle of the blades into a rotation stop state to the pitch control device, upon elapse of predetermined limited duration or when a predetermined condition has been fulfilled, the windturbine control panel gives a command to stop (discontinue) power generation to the power control device.

[Advantageous Effects of Invention]

According to the present invention, it is possible to prevent a large load from acting on blades due to over-revolving speed when the windturbine is stopped and the load acting on the blades when the windturbine is stopped can be reduced.

Challenges, configurations, and advantageous effects which are other than noted above will be clarified from the following description of an embodiment.

In the drawings:

Fig. 1 is a diagram depicting the equipment structure of a typical windturbine to which the present invention is applied and components to be controlled;

Fig. 2 is a diagram depicting an example of a fundamental control block diagram according to the present invention;

Fig. 3 depicts a control block diagram according to a first embodiment of the present invention;

Fig. 4 depicts a control block diagram according to a second embodiment of the present invention;

Fig. 5 depicts a control block diagram according to a third embodiment of the present invention;

Fig. 6 depicts a control block diagram according to a fourth embodiment of the present invention;

Fig. 7 depicts a control block diagram according to a fifth embodiment of the present invention;

Fig. 8 is a diagram representing a relation between continuation/discontinuation of power generation and the revolving speed of the windturbine in a time series graph.

Fig. 9 is a diagram explaining influence of aerodynamic torque (aerodynamic brake) produced by the windturbine rotor, which varies depending on the blade pitch angle, on the revolving speed of the windturbine; and

Fig. 10 is a diagram explaining an upper limit of revolving speed of the windturbine when the windturbine is stopped.

In the following, an embodiment of the present invention will be described with the aid of the drawings.

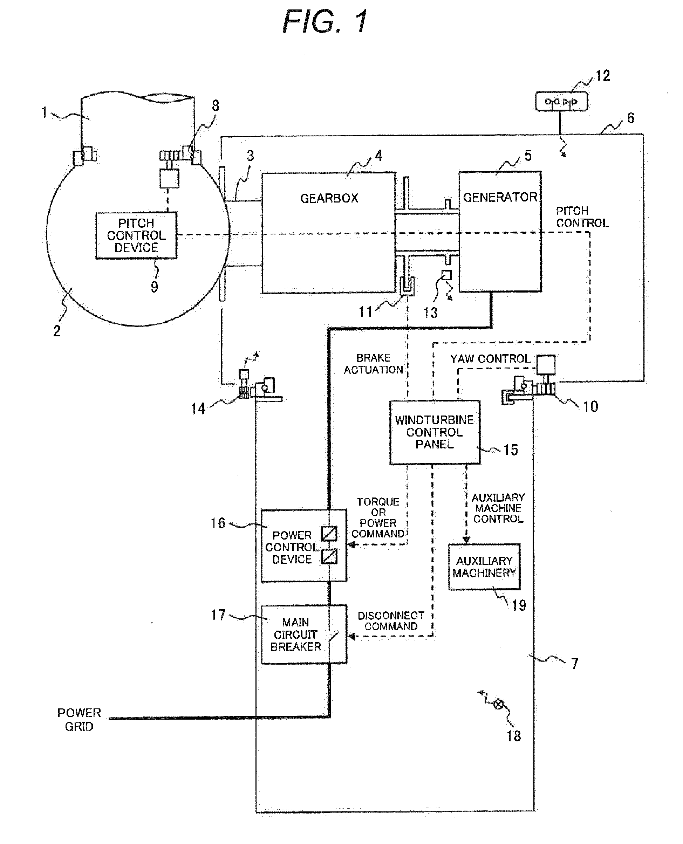

First, an example of equipment structure of a windturbine to which the present invention is applied and components to be controlled is described with Fig. 1. A large-scale wind power generator (with a rated output of 100 kW or more) to which the present invention is applied basically performs unattended automatic operation and connects to a power grid to which the generated electric power is supplied.

The windturbine includes plural blades 1, a hub 2 on which the blades 1 are installed, a main shaft 3 which is connected to the hub 2, a gearbox 4 which increases the revolving speed of the main shaft 3, a generator 5 which is connected to the gearbox 4 and generates electric power, a nacelle 6 which supports the main shaft 3 rotatably and houses the gearbox 4 and the generator 5, and a tower 7 which supports the nacelle 6 rotatably.

The windturbine also includes an anemometer 12, a revolving speed sensor 13 which measures the revolving speed of the generator 5, a yaw angle sensor 14 which measures the yaw angle of the nacelle 6, among others, and the outputs of these sensors are sent to a windturbine control panel 15 installed inside the tower 7.

The windturbine control panel 15 controls components to be controlled within the windturbine according to a control command from outside and the outputs of the sensors and makes the windturbine perform unattended automatic operation. The components to be controlled are as follows: a pitch control device 9 (pitch drive mechanism 8), a yaw drive mechanism 10, a power control device 16, a main circuit breaker 17, and auxiliary machinery 19 (which includes, e.g., a rotor brake 11 and others such as a hydraulic unit and a cooling unit which are omitted from depiction), among others. The pitch control device 9 (pitch drive mechanism 8) changes the angle of the blades 1. The yaw drive mechanism 10 changes the orientation of the nacelle 6 as a whole. The power control device 16 adjusts the electric power (or rotational torque) of the windturbine. The main circuit breaker 17 is responsible for electrical connection to the power system.

In the windturbine, the states of its components are monitored by the sensors. In case an abnormality has been detected by the windturbine control panel 15 or power generation is manually discontinued by windturbine operating personnel (pressing an Emergency Stop button 18, which in turn sends a stop command to the windturbine control panel 15), a stop operation is performed. The present invention concerns what command is given by the windturbine control panel 15 to the pitch control device, power control device 16, and main circuit breaker 17 in this stop operation of the wind power generation system.

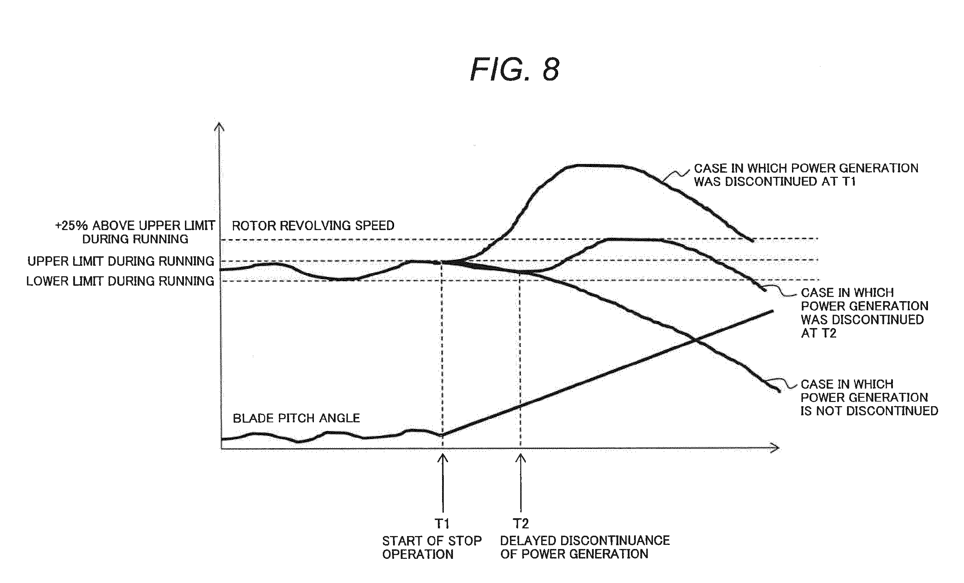

Then, background to the development of the present invention is described with Figs. 8 thru 10.

When stopping the windturbine, it has so far been practiced to feather the blades and discontinue power generation, regardless of the cause (condition) of stopping the windturbine. In this case, as is presented in Fig. 8, at T1, upon the start of an operation to stop the windturbine, that is, turning the blades to a feather position by controlling the pitch angle of the blades, when power generation is discontinued, the rotational system of the windturbine rotor becomes free from load and the rotor revolving speed tends to increase. In turn, over-revolving speed of the rotor occurs and relative speed of wind that flows in the blades increases, which may produce a huge load applied to the blades and the rotor.

The present inventors focus attention on the fact that, when the windturbine stops, continuing power generation for short duration does not have a negative impact on the windturbine and the power grid in a certain case and have found that, in such a case, it is expedient to continue power generation to prevent over-revolving speed of the rotor when carrying out the operation to stop the windturbine. That is, if power generation should be discontinued at time T2 delayed from the start of the operation to stop the windturbine, as is presented in Fig. 8, an increase in the revolving speed of the windturbine falls within an acceptable range (the revolving speed of the windturbine at which the load acting on the blades is at an acceptable level). If power generation is not discontinued, the revolving speed of the windturbine gradually decreases. However, because the windturbine is stopped by any abnormality, it is desirable to discontinue power generation soon.

Therefore, the present inventors arrange the windturbine to discontinue power generation when the following condition has been fulfilled: the load acting on the blades falls within an acceptable range when the windturbine is stopped.

As described previously, a design load that determines strength of the windturbine structure is roughly divided into three loads: a load that is applied to the windturbine placed in a stop state, when it is subjected to wind at a tremendous wind velocity such as a typhoon (load under tremendous wind); a load that is applied to the windturbine during power generation (load during power generation); and a load that is applied to the windturbine when the stop operation is carried out (load in stop operation). It is important to prevent a load greater than the load under tremendous wind from being produced in other states. The present inventors focus attention on this point and arrange the windturbine so that the load acting on the blades in the operation to stop the windturbine will not be greater than the load acting on the blades under tremendous wind.

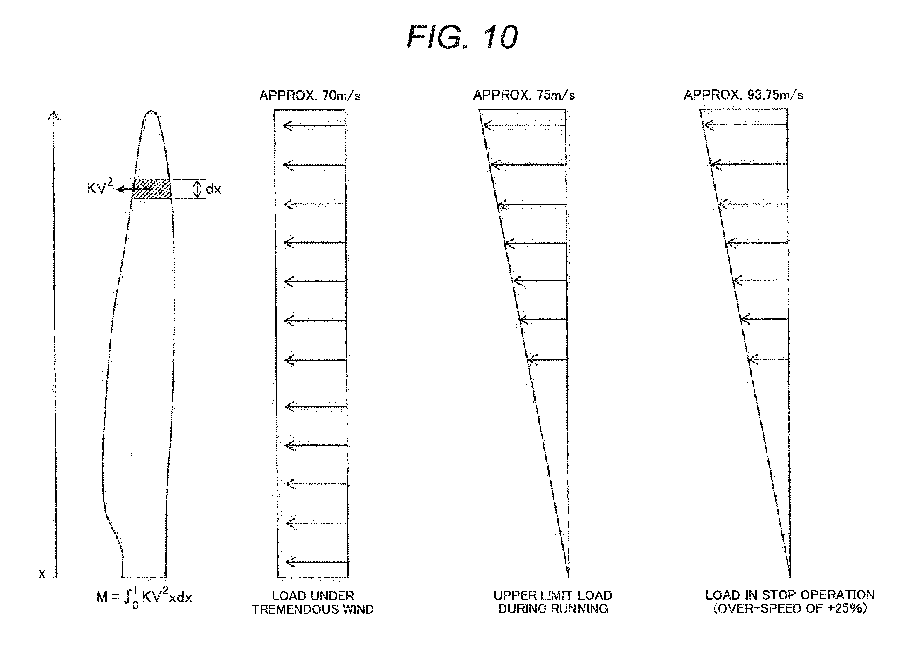

Fig. 10 presents a result of an approximate calculation of a relation between the revolving speed of the windturbine and the load acting on the blades. As is presented in Fig. 10, if a set wind velocity of tremendous wind is approx. 70 m/s, a load M acting on the root of a blade is expressed by the following equation. Here, k is a constant.

[Equation 1]

$$M = \int_0^1 K70^2 x dx$$
$$= 2450K$$

If an upper limit speed (speed at which the blade tip revolves) during running is approx. 75 m/s, the load M acting on the root of a blade is expressed by the following equation. It can be seen that the load M during running is smaller than the load M under tremendous wind.

[Equation 2]

$$M = \int_0^1 K(75x)^2 x dx$$
$$= 1406K$$

For the load M in the operation to stop the windturbine, it is required not to exceed the load M under tremendous wind. According to this result of approximate calculation, the load M in the stop operation does not exceed the load M under tremendous wind, if an increase in the speed at which the blade tip revolves falls within a range of +25% above the upper limit speed during running. That is, when over-speed in the operation to stop the windturbine relative to the speed during running is assumed to be +25%, the load acting on the root of a blade is expressed by the following equation. It can be seen that the load acting on the root of a blade when over-speed is assumed to be +25% is smaller than the load M under tremendous wind.

[Equation 3]

$$M = \int_0^1 K(93.75x)^2 x dx$$
$$= 2197K$$

As above, if over-speed in the operation to stop the windturbine falls within approx. +25% above the upper limit speed during running, aerodynamic load when stopping the windturbine falls less than the load under tremendous wind. However, this calculation method is approximate calculation and the result differs depending on the effects of assumed wind velocity of tremendous wind and the form and mass of a blade. Thus, the upper limit speed in the operation to stop the windturbine should be set appropriately according to actual conditions.

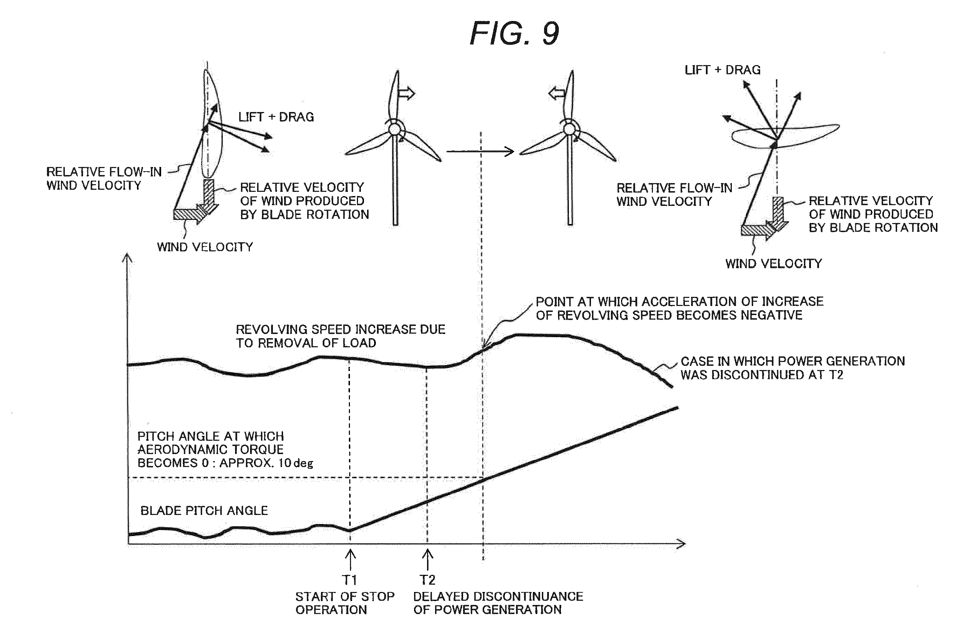

To suppress an increase in the revolving speed in the operation to stop the windturbine within 25%, timing to discontinue power generation should be examined by simulation. That is, an observation is made of an increase in the revolving speed, while varying the timing to discontinue power generation. Fig. 9 is a diagram obtained from this simulation, which explains influence of aerodynamic torque (aerodynamic brake) produced by the windturbine rotor, which varies depending on the blade pitch angle, on the revolving speed of the windturbine. As is presented in Fig. 9, as long as power generation continues, the revolving speed goes in a decreasing direction. After power generation has been discontinued, the revolving speed starts to increase because the rotational system has become free from load. However, if the pitch angle moves to a certain degree toward a feather position sufficiently before the revolving speed reaches an increase of 25%, the aerodynamic torque starts to act in a braking direction opposite to rotation, an increase in the revolving speed starts to decelerate, and a further increase in the revolving speed can be suppressed. In examples in Figs. 8 and 9, even if power generation is discontinued before a pitch angle at which the aerodynamic torque becomes substantially zero, an increase in the revolving speed in the operation to stop the windturbine can fall within +25% above the upper limit speed (upper limit revolving speed) during running. In other words, by setting limited duration until discontinuing power generation in this way, it is possible to ensure generated electric power or torque that allows an upper limit value of revolving speed in the operation to stop the windturbine to be within +25% above the upper limit speed in the running range during normal running for a time when power generation continues. By setting limited duration until discontinuing power generation in this way, it is also possible to shorten time until discontinuing power generation. In other words, continuing power generation for short duration makes it possible to suppress over-revolving speed in the operation to stop the windturbine.

As described above, in a case where an abnormality causes stopping of the windturbine, and if continuing power generation for short duration does not have a negative impact on the windturbine and the power grid, the operation to stop the windturbine is carried in such a way that power generation is continued so that over-revolving speed can be prevented. Thereby, the load in the operation to stop the windturbine does not become dominant as a design load. Consequently, optimizing the windturbine structure can be accomplished and an increase in the power generation cost can be suppressed.

In the present invention, causes of stopping the windturbine are classified by case and control action in the operation to stop the windturbine varies accordingly. Classifying the causes of stopping the windturbine is detailed below.

In the preset invention, in a case where a cause of stop is at least an abnormality in which an upper limit of revolving speed has been exceeded (over-revolving speed), the windturbine control panel issues a command to continue power generation to the power control device and gives a command to immediately change the pitch angle of the blades into a rotation stop state to the pitch control device. This is because continuing power generation for short duration does not have a negative impact on the windturbine and/or the power grid. Issuing the command to continue power generation to the power control device may be that a command to immediately stop power generation to the power control device is not issued in some cases. Over-revolving speed in the operation to stop the windturbine should most primarily be coped with as the abnormality in which the upper limit of revolving speed has been exceeded. However, over-revolving speed in the operation to stop the windturbine may occur when the operation to stop the windturbine is carried out because of another abnormality. Therefore, in a preferred aspect of the present invention, in a case where another abnormality causes over-revolving speed, and if continuing power generation for short duration does not have a negative impact on the windturbine and/or the power grid, likewise, the windturbine control panel issues a command to continue power generation to the power control device and gives a command to change the pitch angle of the blades into a rotation stop state to the pitch control device.

A cause of stop (a condition for stop) for which continuing power generation for short duration does not have a negative impact on the windturbine and/or the power grid corresponds to any of abnormalities that are enumerated below. However, as noted above, the abnormality in which the upper limit of revolving speed has been exceeded (over-revolving speed) is always deemed as an object for which control action of the present invention should be performed.

(1) Mechanical abnormalities (these abnormalities are detected by a sensor.)

a) Vibration (such as vibration of bearings which support the nacelle frame and rotor)
b) Noise (such as noise inside the nacelle)
c) Abnormal rotating speed (particularly, an abnormality that may produce over-revolving speed)
d) Torsion/deformation of the rotor
e) Torsion of electric wires (which is presumed to occur by yaw turning beyond a given degree in a certain direction, which is detected by an encoder or the like installed on a yaw turning gear)
f) Abnormal temperature (abnormal temperature of a hydraulic system and a cooling system for auxiliary machinery, bearings, control panel, generator, transformer, etc.)
g) Abnormal pressure (abnormal pressure in the hydraulic system and the cooling system for auxiliary machinery)
h) Abnormal fluid level (abnormal fluid level in the hydraulic system and the cooling system for auxiliary machinery)

(2) Abnormalities on external wind

i) Rapid change of wind velocity and wind direction (e.g., a case where an average wind velocity for a predefined period (5 seconds) rapidly changes beyond a predetermined wind velocity and a case where the wind direction changes by 90 degrees for a predefined period (10 seconds). These abnormalities tend to produce over-revolving speed, next to abnormal rotating speed. Hence, it is desirable to handle these abnormalities the same as abnormal rotating speed.

(3) Electric abnormalities in the auxiliary machinery which is not directly related to a line from the generator to the power grid (these abnormalities may occur independently of wind velocity and, in most cases, do not cause over-revolving speed)

j) Abnormal voltage
k) Abnormal current

l) Abnormal frequency
m) Abnormal power

On the other hand, when continuing power generation for short duration has a negative impact on the windturbine and/or the power grid, instead of the above-mentioned control actions, the windturbine control panel a) gives a command to immediately change the pitch angle of the blades into a rotation stop state to the pitch control device; b) gives a command to immediately stop power generation to the power control device; and c) gives a command to immediately disconnect to the main circuit breaker.

Conditions for execution of this control include the following conditions:

n) Abnormal voltage in the line from the generator to the power grid
o) Abnormal current in the line from the generator to the power grid
p) Abnormal frequency in the line from the generator to the power grid
q) Abnormal electric power in the line from the generator to the power grid
r) Communication abnormality (such as disconnection or the like that disables signal transmission and reception)
s) Abnormality of a control device (abnormality of a watch dog timer and others)

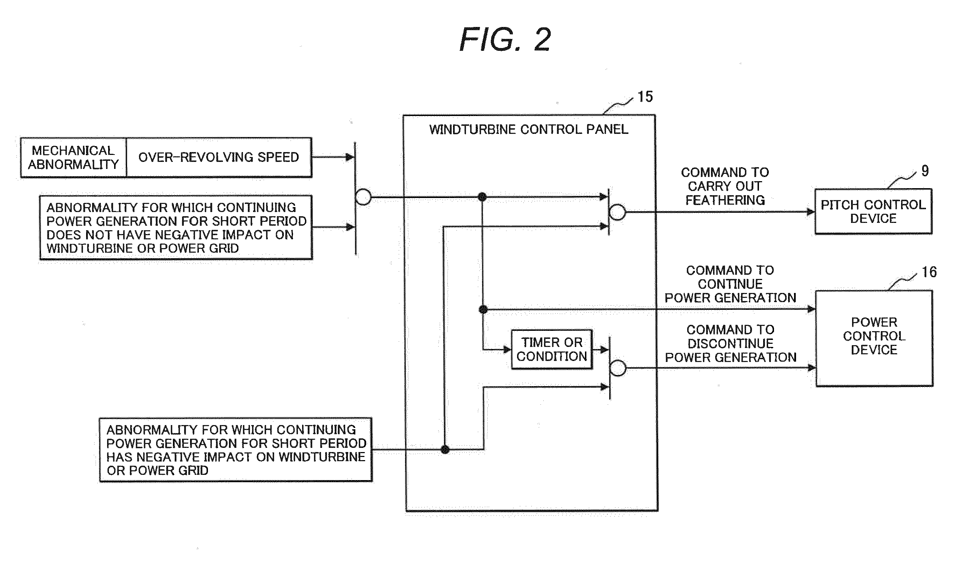

Fig. 2 depicts an example of a fundamental control block diagram according to the present invention. As in Fig. 2, in a case of over-revolving speed (abnormal rotating speed) which is one of the mechanical abnormalities and in a case where the windturbine is stopped by another cause of stop for which continuing power generation for short duration does not have a negative impact on the windturbine and/or the power grid, the windturbine control panel 15 gives a command to immediately carry out feathering to the pitch control device 9. At the same time, the control panel gives a command to continue power generation to the power control device 16. Besides, the control panel sets limited duration mentioned previously and, after elapse of short duration, gives a command to discontinue power generation to the power control device 16. A description about "condition" will be provided later. In a case where the windturbine is stopped by a cause of stop for which continuing power generation for short duration has a negative impact on the windturbine and/or the power grid, the control panel gives a command to immediately carry out feathering to the pitch control device 9 and a command to immediately discontinue power generation to the power control device 16. For example, in a case where the frequency of at least any of current, voltage, and electric power has deviated from a frequency range predetermined in the wind power generation system or power grid, the control panel gives a command to immediately carry out feathering to the pitch control device 9 and a command to immediately discontinue power generation to the power control device 16.

When the windturbine is stopped by a cause of stop for which continuing power generation for short duration does not have a negative impact on the windturbine and/or the power grid, a "condition" in which a command to discontinue power generation should be given to the power control device 16 after elapse of short duration is as follows. That is, when power generation is continued, a lower limit of revolving speed may be reached, which makes the windturbine and an electric power system of the wind turbine unable to maintain power generation, particularly when wind is moderate (for example, inter alia, performance limitation of a converter (inverter/converter) which converts frequency of the generator to frequency of the power grid). In case the windturbine has been put in such a condition, the control panel gives a command to discontinue power generation and causes the main circuit breaker to disconnect without waiting for the lapse of limited duration of continuing power generation, mentioned previously.

When power generation is continued, it is desirable to keep torque at a constant value or less relative to a torque value at the start of the stop operation to avoid imposing an excessive load on the rotational system of the windturbine. If control of the generator is torque control, the control panel issues a command to keep torque constant or performs ramp control to ramp down torque over time. The torque ramp down control has less mechanical effect on the rotational system, but also has a risk of increasing the revolving speed. Control to keep torque constant is simple, highly reliable, and less likely to increase the revolving speed; so it is more desirable.

To eliminate the need to determine if the revolving speed has become too low, a torque control command may be determined by feedback control in which, with reference to the current revolving speed, a target value is given so that the revolving speed becomes near to the lower limit value of revolving speed for allowing power generation. When the control panel issues a power command rather than a torque command to the power control device, it gives a control signal representing a result of multiplying a torque command value by the current revolving speed, as the power command. Here, the torque command value is based on the control to keep torque constant or the ramp down control as mentioned previously.

According to the present invention, the generator continues power generation when the operation to stop the windturbine is carried out. Thereby, torque continues to be applied to the rotating body of the rotor, an increase in the revolving speed can be suppressed, and the load acting on the windturbine in the operation to stop the windturbine can be reduced.

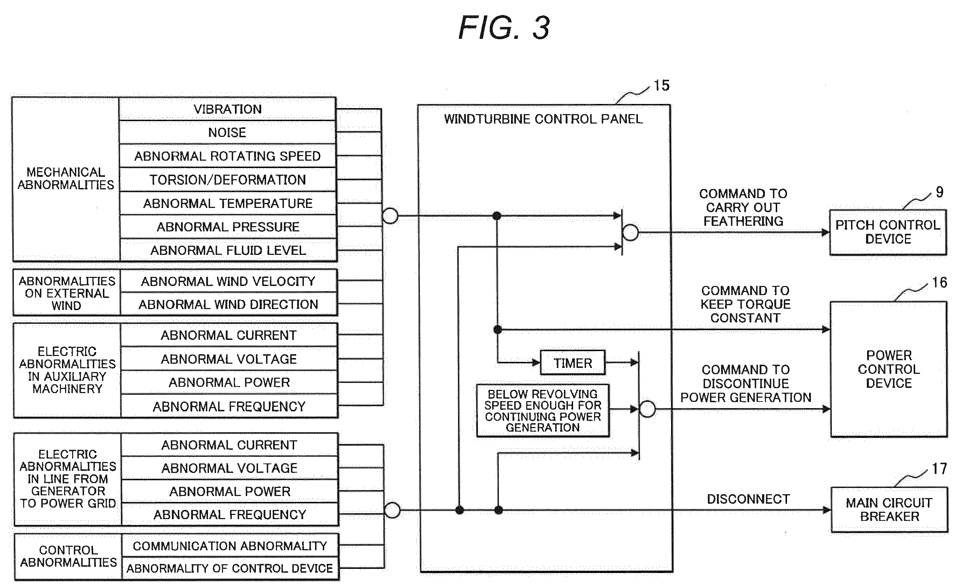

Embodiments of concrete control blocks of the present invention are described below with Figs. 3 thru 7.

First Embodiment

Fig. 3 depicts a first embodiment. In the first embodiment, in a case where the windturbine is stopped by a cause of stop (condition for stop), including abnormal revolving speed, for which continuing power generation for short duration does not have a negative impact on the windturbine and/or the power grid, the windturbine control panel 15 gives a command to immediately carry out feathering to the pitch control device 9. At the same time, the control panel gives a command to continue power generation to the power control device 16. Limited duration mentioned previously and a minimum revolving speed enough for continuing power generation are set. Upon elapse of the duration or when the condition has been fulfilled, the control panel gives a command to discontinue power generation to the power control device 16 (it issues the command to discontinue power generation by OR condition). A cause of stop (condition for stop) for which continuing power generation for short duration does not have a negative impact on the windturbine and/or the power grid corresponds to any of the above-mentioned causes (conditions) a) to m). In the first embodiment, when power generation is continued, the control panel issues a command to keep torque applied at the start of the operation to stop the windturbine (a command to keep torque constant) to the power control device 16. In a case where the windturbine is stopped by a cause of stop (any of the above-mentioned causes n) to s)) for which continuing power generation for short duration has a negative impact on the windturbine and/or the power grid, the control panel gives a command to immediately carry out feathering to the pitch control device 9, a command to immediately discontinue power generation to the power control device 16, and a command to immediately disconnect to the main circuit breaker 17.

Second Embodiment

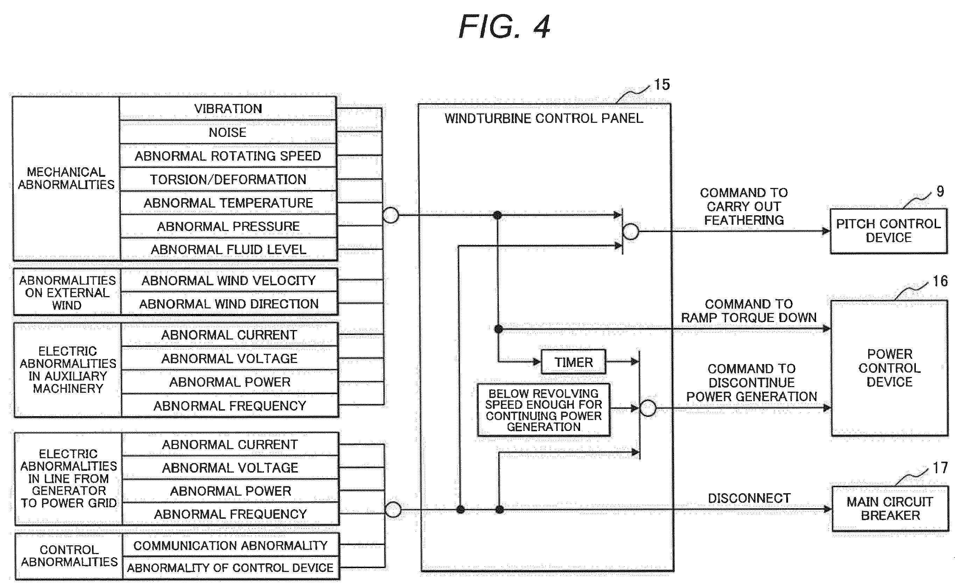

Fig. 4 depicts a second embodiment. In the second embodiment, when power generation is continued, the ramp down control is applied instead of the control to keep torque constant as in the first embodiment. In this case, a ramp down rate is set so that the revolving speed of the generator does not exceed +25% above the upper limit of the running range.

Third Embodiment

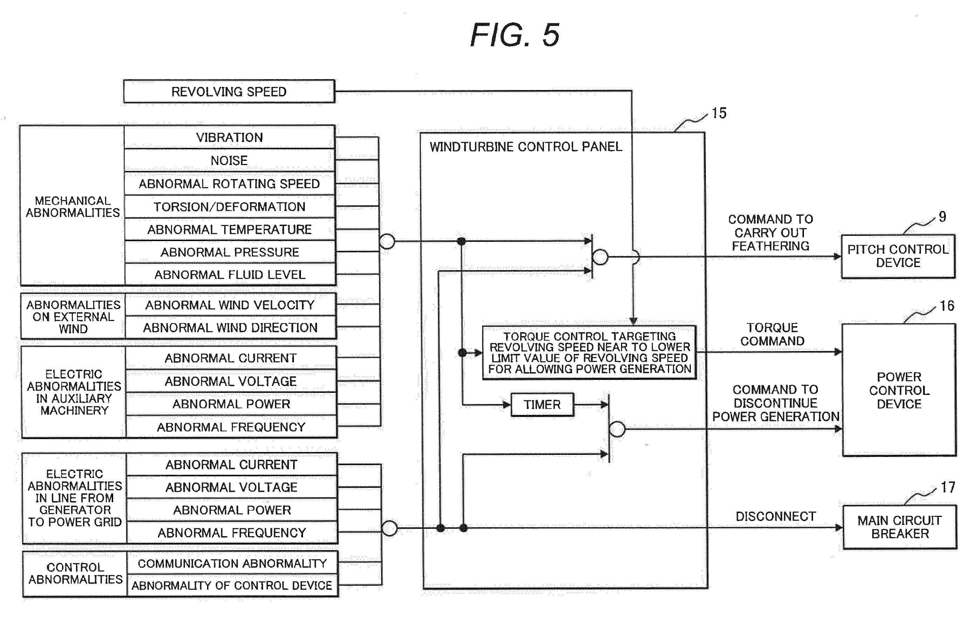

Fig. 5 depicts a third embodiment. In the third embodiment, the feedback control is applied instead of the control to keep torque constant as in the first embodiment. In the third embodiment, the control panel takes in a value of the current revolving speed of the windturbine and sets a torque command value so that the revolving speed will go near to the lower limit value of revolving speed for allowing power generation. Thereby, the condition for a discontinuation command only depends on the timer and control with regard to a discontinuation command becomes simple.

Fourth Embodiment

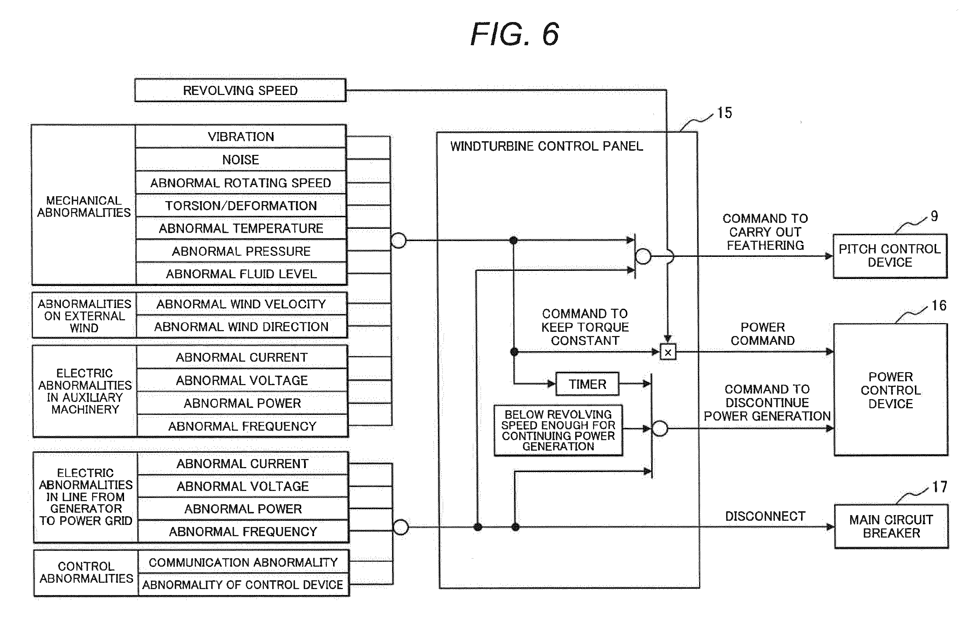

Fig. 6 depicts a fourth embodiment. In the fourth embodiment, the control panel gives a power command which is a result of multiplying a torque command by a revolving speed value to the power control device 16, instead of giving a torque command to the power control device 16 as in the first embodiment. While the fourth embodiment is an example of modification to the first embodiment, the same modification as done to the first embodiment can also be made to the second and third embodiments.

Fifth Embodiment

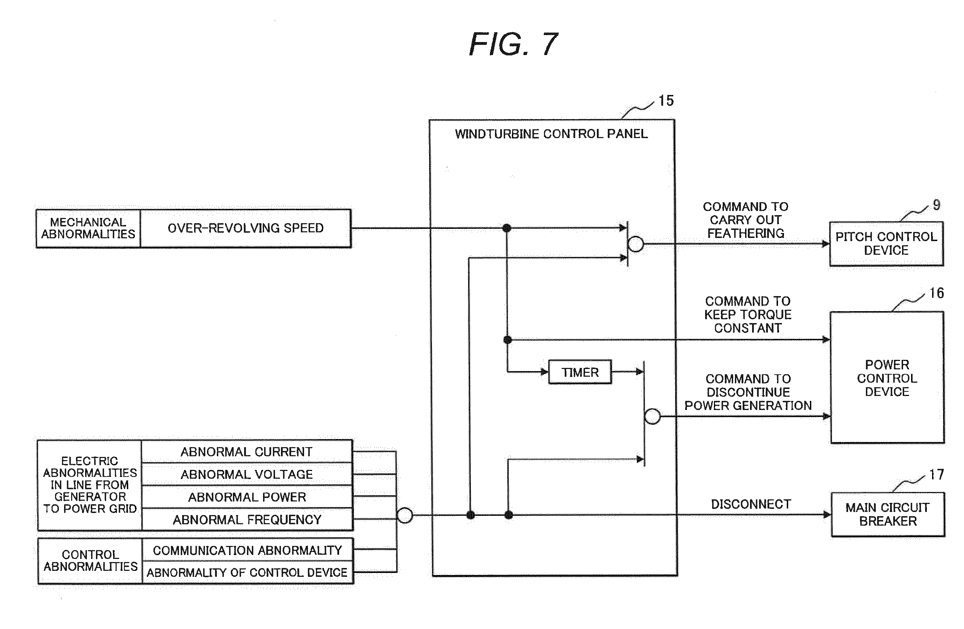

Fig. 7 depicts a fifth embodiment. In the fifth embodiment, over-revolving speed (abnormal revolving speed) which is a mechanical abnormality is only selected out as a condition in which power generation should be continued for certain duration. Over-revolving speed is a crucial abnormality as the condition in which power generation should be continued for certain duration. This is because over-revolving speed must be suppressed surely so that the load acting on the blades in the operation to stop the windturbine will be smaller than the load under tremendous wind. As for other causes, the possibility of producing over-revolving speed is not always high. On the other hand, as for a condition in which power generation should be discontinued immediately and disconnection be made, one of the same abnormalities may trigger this action as in the embodiments depicted in Figs. 3 thru 6.

The present invention is not limited to the described embodiments and various modifications are included therein. For example, the foregoing embodiments are those described in detail to explain the present invention clearly and the present invention is not necessarily limited to those including all components described. A subset of the components of an embodiment can be replaced by components of another embodiment. To the components of an embodiment, components of another embodiment can be added. For a subset of the components of each embodiment, other components can be added to the subset or the subset can be removed and replaced by other components.

[Reference Sign List]

    1: Blades
    2: Hub
    3: Main shaft
    4: Gearbox
    5: Generator

6: Nacelle
7: Tower
8: Pitch drive mechanism
9: Pitch control device
10: Yaw drive mechanism
11: Rotor brake
12: Anemometer
13: Revolving speed sensor
14: Yaw angle sensor
15: Windturbine control panel
16: Power control device
17: Main circuit breaker
18: Emergency Stop button
19: Auxiliary machinery

**Claims**

1. A wind power generation system supplying generated electric power to a power grid, the wind power generation system comprising:

   blades (1) whose pitch angle is controllable;
   a windturbine control panel (15);
   a power control device (16) that controls power generation of a windturbine according to a command from the windturbine control panel (15);
   a main circuit breaker (17) that disconnects connection to the power grid according to a command from the windturbine control panel (15); and
   a pitch control device (8, 9) that controls the pitch angle according to a command from the windturbine control panel (15),
   wherein, in a case where a cause of stopping the windturbine is at least an abnormality in which an upper limit of revolving speed has been exceeded, the windturbine control panel (15) issues a command to continue power generation to the power control device (16) and gives a command to change the pitch angle of the blades (1) into a rotation stop state to the pitch control device (8, 9).

2. The wind power generation system according to Claim 1,
   wherein, after giving the command to change the pitch angle of the blades (1) into the rotation stop state to the pitch control device (8, 9), the windturbine control panel (15) gives a command to discontinue power generation to the power control device (16) on condition that a load acting on the blades (1) in an operation to stop the windturbine does not exceed a load acting on the blades (1) under tremendous wind.

3. The wind power generation system according to Claim 1,

wherein, after giving the command to change the pitch angle of the blades (1) into the rotation stop state to the pitch control device (8, 9), upon elapse of predetermined limited duration, the windturbine control panel (15) gives a command to discontinue power generation to the power control device (16).

4. The wind power generation system according to Claim 2,
   wherein, after giving the command to change the pitch angle of the blades (1) into the rotation stop state to the pitch control device (8, 9), upon elapse of predetermined limited duration or when a predetermined condition has been fulfilled, the windturbine control panel (15) gives a command to discontinue power generation to the power control device (16).

5. The wind power generation system according to Claim 3 or 4,
   wherein the predetermined limited duration is set so that a load acting on the blades (1) in the operation to stop the windturbine will not exceed a load acting on the blades (1) under tremendous wind.

6. The wind power generation system according to Claim 5,
   wherein the limited duration is set so that a maximum value of revolving speed of the windturbine in the operation to stop the windturbine will fall within a range of +25% above a rated revolving speed.

7. The wind power generation system according to Claim 4,
   wherein the predetermined condition is having reached a lower limit of revolving speed, which makes the wind power generation system unable to maintain power generation.

8. The wind power generation system according to any of Claims 1 to 7,
   wherein, in a case where an abnormality causes stopping of the windturbine, and if continuing power generation after stopping the windturbine does not have a negative impact on the windturbine and the power grid, the windturbine control panel (15) gives the command to continue power generation to the power control device (16) and gives the command to change the pitch angle of the blades (1) into the rotation stop state to the pitch control device (8, 9).

9. The wind power generation system according to any of Claims 1 to 8,
   wherein the windturbine control panel (15) gives a command to continue to make output so as not to exceed output at the stop of the windturbine to the power control device (16).

10. The wind power generation system according to Claim 9,
wherein the windturbine control panel (15) gives a command to keep output constant to the power control device (16).

11. The wind power generation system according to any of Claims 1 to 10,
wherein the power control device (16) outputs a torque command or a power command.

12. The wind power generation system according to any of Claims 1 to 11,
wherein, in a case where the frequency of at least any of current, voltage, and electric power has deviated from a frequency range predetermined in the wind power generation system or the power grid, the windturbine control panel (15) gives a command to discontinue power generation to the power control device (16), gives a command to disconnect to the main circuit breaker (17), and gives a command to change the pitch angle of the blades (1) into the rotation stop state to the pitch control device (8, 9).

# FIG. 1

## FIG. 2

PITCH CONTROL DEVICE — 9

POWER CONTROL DEVICE — 16

COMMAND TO CARRY OUT FEATHERING

COMMAND TO CONTINUE POWER GENERATION

COMMAND TO DISCONTINUE POWER GENERATION

WINDTURBINE CONTROL PANEL — 15

TIMER OR CONDITION

| MECHANICAL ABNORMALITY | OVER-REVOLVING SPEED |
| --- | --- |

ABNORMALITY FOR WHICH CONTINUING POWER GENERATION FOR SHORT PERIOD DOES NOT HAVE NEGATIVE IMPACT ON WINDTURBINE OR POWER GRID

ABNORMALITY FOR WHICH CONTINUING POWER GENERATION FOR SHORT PERIOD HAS NEGATIVE IMPACT ON WINDTURBINE OR POWER GRID

# FIG. 3

| | | WINDTURBINE CONTROL PANEL | | | |
|---|---|---|---|---|---|
| MECHANICAL ABNORMALITIES | VIBRATION | | | | |
| | NOISE | | | | |
| | ABNORMAL ROTATING SPEED | | | | |
| | TORSION/DEFORMATION | | | | |
| | ABNORMAL TEMPERATURE | | | | |
| | ABNORMAL PRESSURE | | | | |
| | ABNORMAL FLUID LEVEL | | | | |
| ABNORMALITIES ON EXTERNAL WIND | ABNORMAL WIND VELOCITY | | | | |
| | ABNORMAL WIND DIRECTION | | | | |
| ELECTRIC ABNORMALITIES IN AUXILIARY MACHINERY | ABNORMAL CURRENT | | | | |
| | ABNORMAL VOLTAGE | | | | |
| | ABNORMAL POWER | | | | |
| | ABNORMAL FREQUENCY | | | | |
| ELECTRIC ABNORMALITIES IN LINE FROM GENERATOR TO POWER GRID | ABNORMAL CURRENT | | | | |
| | ABNORMAL VOLTAGE | | | | |
| | ABNORMAL POWER | | | | |
| | ABNORMAL FREQUENCY | | | | |
| CONTROL ABNORMALITIES | COMMUNICATION ABNORMALITY | | | | |
| | ABNORMALITY OF CONTROL DEVICE | | | | |

TIMER

BELOW REVOLVING SPEED ENOUGH FOR CONTINUING POWER GENERATION

COMMAND TO CARRY OUT FEATHERING → PITCH CONTROL DEVICE

COMMAND TO KEEP TORQUE CONSTANT

COMMAND TO DISCONTINUE POWER GENERATION → POWER CONTROL DEVICE

DISCONNECT → MAIN CIRCUIT BREAKER

15

9

16

17

EP 2 966 297 A1

# FIG. 4

WINDTURBINE CONTROL PANEL — 15

| MECHANICAL ABNORMALITIES | VIBRATION |
| | NOISE |
| | ABNORMAL ROTATING SPEED |
| | TORSION/DEFORMATION |
| | ABNORMAL TEMPERATURE |
| | ABNORMAL PRESSURE |
| | ABNORMAL FLUID LEVEL |

| ABNORMALITIES ON EXTERNAL WIND | ABNORMAL WIND VELOCITY |
| | ABNORMAL WIND DIRECTION |

| ELECTRIC ABNORMALITIES IN AUXILIARY MACHINERY | ABNORMAL CURRENT |
| | ABNORMAL VOLTAGE |
| | ABNORMAL POWER |
| | ABNORMAL FREQUENCY |

| ELECTRIC ABNORMALITIES IN LINE FROM GENERATOR TO POWER GRID | ABNORMAL CURRENT |
| | ABNORMAL VOLTAGE |
| | ABNORMAL POWER |
| | ABNORMAL FREQUENCY |

| CONTROL ABNORMALITIES | COMMUNICATION ABNORMALITY |
| | ABNORMALITY OF CONTROL DEVICE |

TIMER

BELOW REVOLVING SPEED ENOUGH FOR CONTINUING POWER GENERATION

COMMAND TO CARRY OUT FEATHERING → PITCH CONTROL DEVICE — 9

COMMAND TO RAMP TORQUE DOWN

COMMAND TO DISCONTINUE POWER GENERATION → POWER CONTROL DEVICE — 16

DISCONNECT → MAIN CIRCUIT BREAKER — 17

EP 2 966 297 A1

FIG. 5

# FIG. 6

# FIG. 7

WINDTURBINE CONTROL PANEL — 15

| MECHANICAL ABNORMALITIES | OVER-REVOLVING SPEED |
|---|---|

| ELECTRIC ABNORMALITIES IN LINE FROM GENERATOR TO POWER GRID | ABNORMAL CURRENT |
|---|---|
| | ABNORMAL VOLTAGE |
| | ABNORMAL POWER |
| | ABNORMAL FREQUENCY |

| CONTROL ABNORMALITIES | COMMUNICATION ABNORMALITY |
|---|---|
| | ABNORMALITY OF CONTROL DEVICE |

TIMER

COMMAND TO CARRY OUT FEATHERING

COMMAND TO KEEP TORQUE CONSTANT

COMMAND TO DISCONTINUE POWER GENERATION

DISCONNECT

PITCH CONTROL DEVICE — 9

POWER CONTROL DEVICE — 16

MAIN CIRCUIT BREAKER — 17

EP 2 966 297 A1

## FIG. 8

CASE IN WHICH POWER GENERATION WAS DISCONTINUED AT T1

+25% ABOVE UPPER LIMIT DURING RUNNING

ROTOR REVOLVING SPEED

UPPER LIMIT DURING RUNNING

LOWER LIMIT DURING RUNNING

CASE IN WHICH POWER GENERATION WAS DISCONTINUED AT T2

CASE IN WHICH POWER GENERATION IS NOT DISCONTINUED

BLADE PITCH ANGLE

T1
START OF STOP OPERATION

T2
DELAYED DISCONTINUANCE OF POWER GENERATION

EP 2 966 297 A1

# FIG. 9

RELATIVE FLOW-IN WIND VELOCITY

LIFT + DRAG

RELATIVE VELOCITY OF WIND PRODUCED BY BLADE ROTATION

WIND VELOCITY

LIFT + DRAG

RELATIVE FLOW-IN WIND VELOCITY

RELATIVE VELOCITY OF WIND PRODUCED BY BLADE ROTATION

WIND VELOCITY

REVOLVING SPEED INCREASE DUE TO REMOVAL OF LOAD

POINT AT WHICH ACCELERATION OF INCREASE OF REVOLVING SPEED BECOMES NEGATIVE

CASE IN WHICH POWER GENERATION WAS DISCONTINUED AT T2

PITCH ANGLE AT WHICH AERODYNAMIC TORQUE BECOMES 0 : APPROX. 10 deg

BLADE PITCH ANGLE

T1
START OF STOP OPERATION

T2
DELAYED DISCONTINUANCE OF POWER GENERATION

EP 2 966 297 A1

# FIG. 10

$$M = \int_0^1 KV^2 x\,dx$$

LOAD UNDER
TREMENDOUS WIND

APPROX. 70m/s

APPROX. 75m/s

UPPER LIMIT LOAD
DURING RUNNING

APPROX. 93.75m/s

LOAD IN STOP OPERATION
(OVER-SPEED OF +25%)

EP 2 966 297 A1

**EP 2 966 297 A1**

Europäisches
Patentamt

European
Patent Office

Office européen
des brevets

## EUROPEAN SEARCH REPORT

Application Number

EP 15 17 5126

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/133830 A1 (LOH FRIEDRICH [DE] ET AL) 3 June 2010 (2010-06-03) | 1,8,11 | INV. F03D7/02 |
| Y | * paragraphs [0006], [0009], [0018], [0021], [0032], [0033] * | 2-7,9, 10,12 | |
| X | US 2012/134807 A1 (AXELSSON ULF [SE] ET AL) 31 May 2012 (2012-05-31) * paragraphs [0005], [0017], [0035], [0037] * * figure 1 * | 1,11 | |
| Y | US 2008/277938 A1 (OOHARA SHINYA [JP] ET AL) 13 November 2008 (2008-11-13) * paragraphs [0006], [0044], [0055], [0058], [0069], [0117] * | 2-7,9,12 | |
| Y | US 6 137 187 A (MIKHAIL AMIR S [US] ET AL) 24 October 2000 (2000-10-24) * column 2, lines 42-48 * * column 12, lines 14-18 * * column 17, line 65 - column 18, line 17 * | 10 | |
| | | | TECHNICAL FIELDS SEARCHED (IPC) |
| | | | F03D |
| A | US 2010/140939 A1 (SCHOLTE-WASSINK HARTMUT [DE] ET AL) 10 June 2010 (2010-06-10) * paragraphs [0005], [0012], [0018], [0037], [0040], [0041] * * figure 1 * | 1,8,11, 12 | |
| A | EP 2 108 825 A2 (GEN ELECTRIC [US]) 14 October 2009 (2009-10-14) * paragraphs [0017], [0021], [0026] * | 1,8,12 | |

The present search report has been drawn up for all claims

| Place of search | Date of completion of the search | Examiner |
|---|---|---|
| The Hague | 5 November 2015 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 15 17 5126

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2015

| Patent document cited in search report | | Publication date | Patent family member(s) | | Publication date |
|---|---|---|---|---|---|
| US 2010133830 | A1 | 03-06-2010 | CN | 102052244 A | 11-05-2011 |
| | | | EP | 2317130 A2 | 04-05-2011 |
| | | | US | 2010133830 A1 | 03-06-2010 |
| US 2012134807 | A1 | 31-05-2012 | NONE | | |
| US 2008277938 | A1 | 13-11-2008 | JP | 4501958 B2 | 14-07-2010 |
| | | | JP | 2008283747 A | 20-11-2008 |
| | | | US | 2008277938 A1 | 13-11-2008 |
| | | | US | 2009261589 A1 | 22-10-2009 |
| US 6137187 | A | 24-10-2000 | AR | 015148 A1 | 18-04-2001 |
| | | | AU | 737762 B2 | 30-08-2001 |
| | | | BR | 9811873 A | 02-01-2002 |
| | | | CA | 2300201 A1 | 18-02-1999 |
| | | | CA | 2571368 A1 | 18-02-1999 |
| | | | CN | 1270659 A | 18-10-2000 |
| | | | DE | 69824965 D1 | 12-08-2004 |
| | | | DE | 69824965 T2 | 25-08-2005 |
| | | | DK | 1007844 T3 | 15-11-2004 |
| | | | EP | 1007844 A1 | 14-06-2000 |
| | | | ES | 2224426 T3 | 01-03-2005 |
| | | | JP | 2001512804 A | 28-08-2001 |
| | | | NO | 20000626 A | 10-04-2000 |
| | | | PL | 338639 A1 | 06-11-2000 |
| | | | TR | 200000904 T2 | 21-11-2000 |
| | | | US | 6137187 A | 24-10-2000 |
| | | | WO | 9907996 A1 | 18-02-1999 |
| US 2010140939 | A1 | 10-06-2010 | CN | 102080628 A | 01-06-2011 |
| | | | EP | 2333320 A2 | 15-06-2011 |
| | | | US | 2010140939 A1 | 10-06-2010 |
| EP 2108825 | A2 | 14-10-2009 | CN | 101550908 A | 07-10-2009 |
| | | | EP | 2108825 A2 | 14-10-2009 |
| | | | US | 2009243295 A1 | 01-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006336505 A
- JP 2007064062 A

- JP 2007016628 A